# EUROPEAN PATENT APPLICATION

(11) **EP 4 722 597 A1**
(43) Date of publication of application: **08.04.2026**
(21) Application number: 25202996.2
(22) Date of filing: 18.09.2025
(51) Int. Cl.: F23R 3/28, F23R 3/50

(54) **TURBINE ENGINE AND FUEL NOZZLE ASSEMBLY THEREFOR**

(30) Priority: 02.10.2024 US 202418904481
(71) Applicant: General Electric Company, Cincinnati, Ohio 45215 (US)
(72) Inventor: SHEALY, James, 45069 West Chester (US); KNOLLE, Bernard Gustav, 45215 Cincinnati (US); VENTURATO, Marco, 45069 West Chester (US); ROYER, Brian, 45069 West Chester (US)
(74) Representative: Openshaw & Co.

(57) **Abstract**

A turbine engine (10), comprising a compressor section (12), a combustion section (14), and a turbine section (16) in a serial flow arrangement, with the combustion section (14) further comprising a combustor liner (40) at least partially defining a combustion chamber (50), and a gaseous fuel nozzle assembly (48). The gaseous fuel nozzle assembly (48) comprises a set of mixing tubes (100), a set of fuel jets (114) and an air passage (120), the air passage (120) including a set of air passage outlets (126), with each air passage outlet of the set of air passage outlets (126) tangentially, fluidly coupled to a corresponding mixing tube air inlet (106).

## Description

### TECHNICAL FIELD

The present subject matter relates generally to a turbine engine having a fuel nozzle assembly.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, hydrocarbon fuels are used in the combustor of a turbine engine. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

To reduce the environmentally unwanted byproducts, other fuels, such as hydrogen, are being explored. Hydrogen or hydrogen mixed with another element has a higher flame temperature than traditional hydrocarbon fuels. That is, hydrogen or a hydrogen mixed fuel typically has a wider flammable range and a faster burning velocity than traditional hydrocarbon-based fuels.

### BRIEF DESCRIPTION OF THE DRAWINGS

In the drawings:
FIG. 1 is a schematic view of a turbine engine having a compression section, a combustion section, and a turbine section in accordance with various aspects described herein.
FIG. 2 is a schematic view of the combustion section of FIG. 1 along line II-II in accordance with various aspects described herein.
FIG. 3 is a cross-sectional view illustrating portions of a fuel nozzle assembly, in accordance with aspects of the disclosure.
FIG. 4 is an isometric view illustrating portions of the fuel nozzle assembly in accordance with aspects of the disclosure.
FIG. 5 is a schematic view illustrating portions of the fuel nozzle assembly, viewed from aft, in accordance with aspects of the disclosure.
FIG. 6 is a schematic view illustrating portions of the fuel nozzle assembly, viewed from aft, in accordance with aspects of the disclosure.
FIG. 7 is a schematic view illustrating portions of the fuel nozzle assembly, viewed from aft, in accordance with aspects of the disclosure.
FIG. 8 is a schematic view illustrating portions of the fuel nozzle assembly, viewed from aft, in accordance with aspects of the disclosure.
FIG. 9 is a schematic view illustrating portions of the fuel nozzle assembly, viewed from aft, in accordance with aspects of the disclosure.
FIG. 10 is a flowchart illustrating a method of operating a gas turbine engine in accordance with aspects of the disclosure.

### DETAILED DESCRIPTION

Gaseous fuel, including hydrogen, spreads/disperses at a faster rate than atomized liquid fuel, which can result in less mixing time for the gaseous fuel, shorter fuel mixing tube lengths, and a greater likelihood that the flame from the gaseous fuel may spread farther and faster. This can increase the risk of flashback and flameholding (e.g., in a nozzle or mixer), and increase the impact of controlling the flame and limiting flame spread by controlling the dispersion of the gaseous fuel.

A gaseous fuel nozzle assembly for a combustion section of a turbine engine disclosed herein can include a plurality of mixing tubes in which gaseous fuel and air are mixed before subsequently being introduced to a combustion chamber. Some mixing tube designs require complex swirler airfoils, turbulators, or other features that involve highly complex 3-dimensional formations, which can necessitate complex multi-piece assemblies, complex and expensive five axis machining, or additive manufacturing. Additive manufacturing may not be desirable for at least some applications, as components formed via additive manufacturing can be susceptible to hydrogen embrittlement, be subject to extensive inspections due to problematic metallic features and manufacturing tolerances, and have rough surface features which can increase the risk of flashback and flameholding when used with hydrogen combustion. The design of the mixing tubes disclosed herein can be produced by traditional manufacturing techniques or comparatively simpler 2.5 or 3-dimensional milling, thereby reducing manufacturing complexity and corresponding manufacturing cost as well as avoiding the aforementioned issues with additive manufacturing. However, the disclosed mixing tubes can also be formed by more complex processes, including additive manufacturing and five axis machining.

The fluid coupling between the mixing tubes and an air supply passage as disclosed herein can facilitate mixing of fuel and air, which can help even out thermal and flow variation within portions of the combustion section. Axial swirling of air as disclosed herein can facilitate fuel and air mixing, which can limit emissions (e.g., NOₓ emissions) and limit or prevent flashback and flameholding.

Aspects of the disclosure described herein are directed to a combustor. For purposes of illustration, the present disclosure will be described with respect to a turbine engine. It will be understood, however, that aspects of the disclosure described herein are not so limited and that a combustor as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluidly coupled" means that a fluid is capable of making the connection between the areas specified.

The term "nozzle" has been used in various ways in the context of gas turbine engines. In the instant application, "nozzle" refers to a component having a portion for fluid coupling to a fuel supply and having at least one portion for fluidly coupling with a combustion chamber.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only the dimensions, positions, order, and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

"Proximate" as used herein is a descriptor for locating parts described herein. Further, the term "proximate" means nearer or closer to the part recited than the following part. For example, a first hole proximate a wall, the first hole located upstream from a second hole means that the first hole is closer to the wall than the first hole is to the second hole.

Additionally, as used herein, a "controller" can include a component configured or adapted to provide instruction, control, operation, or any form of communication for operable components to effect the operation thereof. A controller can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), proportional resonant controller (PR), a hardware-accelerated logic controller (e.g. for encoding, decoding, transcoding, etc.), the like, or a combination thereof. Non-limiting examples of a controller can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can be configured for comparing a first value with a second value, and operating and controlling operations of additional components based on the satisfying of that comparison. For example, when a sensed, measured, or provided value is compared with another value, including a stored or predetermined value, the satisfaction of that comparison can result in actions, functions, or operations controllable by the controller.

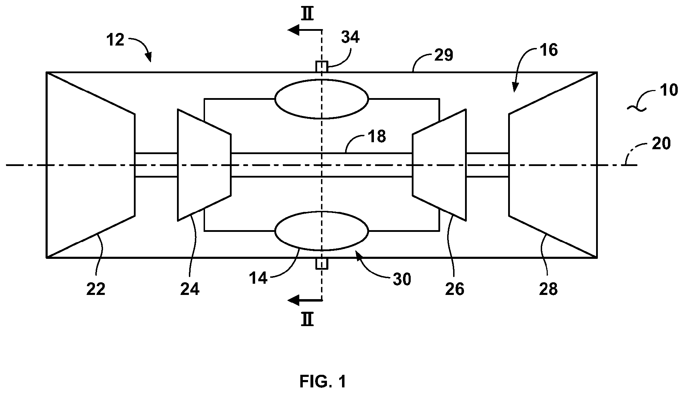

FIG. 1 is a schematic view of a turbine engine 10 (e.g. a gas turbine engine). As a non-limiting example, the turbine engine 10 can be used within an aircraft. The turbine engine 10 can include, at least, a compressor section 12, a combustion section 14, and a turbine section 16. A drive shaft 18 rotationally couples the compressor section 12 and turbine section 16, such that rotation of one affects the rotation of the other, and defines a rotational axis 20 for the turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about and enshroud one or more sections of the turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section 16 is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

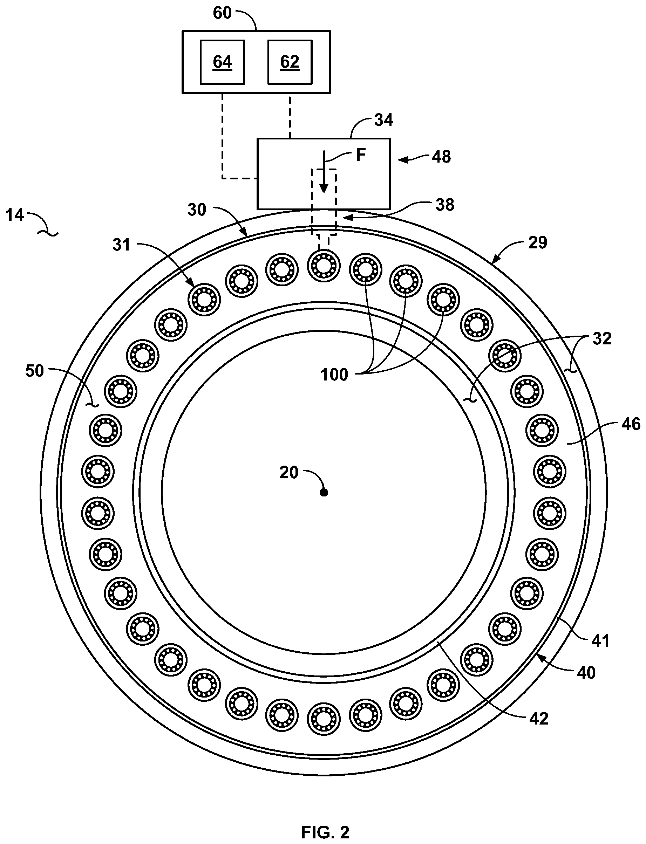

FIG. 2 depicts a cross-sectional view of the combustion section 14 along line II-II of FIG. 1. The combustion section 14 can include a combustor 30 with an annular arrangement of combustor portions 31 disposed around the centerline or rotational axis 20 of the turbine engine 10 (e.g., circumferentially spaced from each other in an annular configuration) (FIG. 1). The combustor portions 31 can, in some configurations, include or be configured as combustor or fuel cups. A fuel nozzle assembly 48 can be connected to each combustor portion 31. The combustor 30 can have a can, can-annular, or annular arrangement depending on the type of engine in which the combustor 30 is located. In a non-limiting example, the combustor 30 can have a combination arrangement located with a shroud or casing 29 of the turbine engine 10. The shroud or casing 29 can enshroud or cover at least a portion of the combustion section 14.

The combustor 30 can be at least partially defined by a combustor liner 40. In some examples, the combustor liner 40 can include an outer liner 41 and an inner liner 42 concentric with respect to each other and arranged in an annular fashion about the engine centerline or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

The combustor liner 40 can at least partially define a combustion chamber 50 arranged annularly about the rotational axis 20. For example, a wall 46 (e.g., a dome wall) may be substantially perpendicular to the rotational axis 20 and can cooperate with the outer liner 41, the inner liner 42, or both, to at least partially define the combustion chamber 50. A compressed air passage 32 can be defined at least in part by both the combustor liner 40 and the shroud or casing 29.

The combustor 30 can include or be connected to a fuel supply 34 (e.g., an external fuel manifold) configured to provide a fuel F. The fuel nozzle assembly 48 includes or fluidly couples the fuel supply 34 with the combustor portions 31 and the combustion chamber 50. The fuel nozzle assembly 48 can include a fuel nozzle body 38 and at least a portion of the wall 46. The fuel F can include any suitable fuel, including gaseous fuel, such as natural gas (NG), hydrogen fuel, which in non-limiting examples can include 100% H₂ (e.g., without a diluent), or combinations thereof.

In examples, the fuel nozzle body 38 can be a gaseous fuel nozzle body, such as a gaseous hydrogen fuel nozzle body, and the fuel nozzle assembly 48 can be a gaseous fuel nozzle assembly, such as a gaseous hydrogen fuel nozzle assembly. The combustor portions 31 can be disposed in a circumferentially spaced configuration at a radial distance from the rotational axis 20 that is greater than a radial distance of the inner liner 42 and less than a radial distance of the outer liner 41. The fuel nozzle assembly 48 includes a set of mixing tubes 100. A controller 60 can be connected to and at least partially control operation of the fuel supply 34, the fuel nozzle assembly 48, or both. The controller 60 can include a processor 62 and a memory 64.

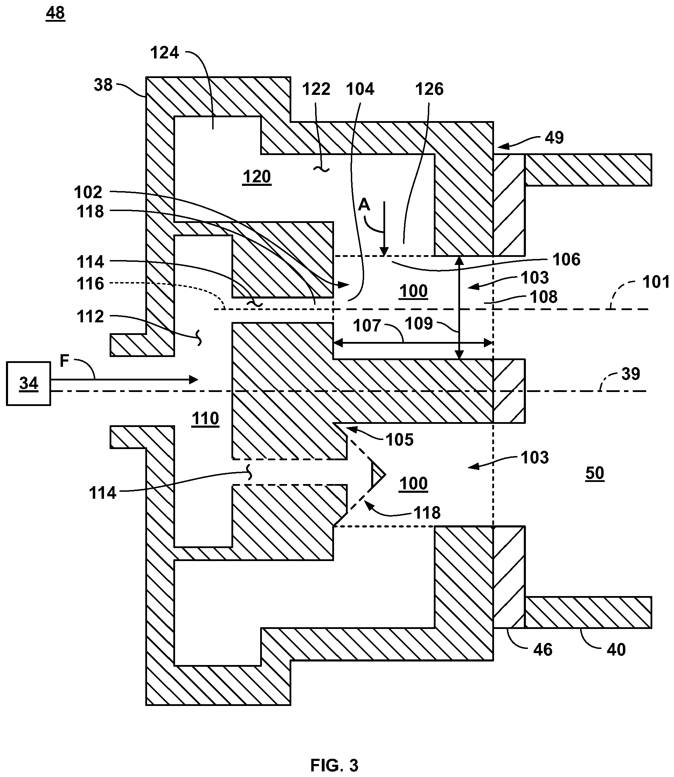

FIG. 3 is a cross-sectional view illustrating portions of the fuel nozzle assembly 48. The fuel nozzle assembly 48 is coupled with the fuel supply 34 and an air supply, such as the compressor section 12 (FIG. 1), to provide a mixture of fuel F and air A to the combustion chamber 50. A fuel nozzle assembly downstream end 49 is fluidly coupled with the combustion chamber 50, such as via at least one of the combustor liner 40 or the wall 46. In some configurations, the fuel nozzle assembly 48 can be coupled to the combustor liner 40 via the wall 46. In other configurations, the fuel nozzle assembly 48 can be coupled directly to the combustor liner 40. The fuel nozzle assembly 48 includes the fuel nozzle body 38. The fuel nozzle body 38 at least partially defines the set of mixing tubes 100, a fuel passage 110, and an air passage 120. The fuel nozzle body 38 further defines a fuel nozzle assembly centerline 39 that can be parallel to the rotational axis 20 (e.g. extend axially).

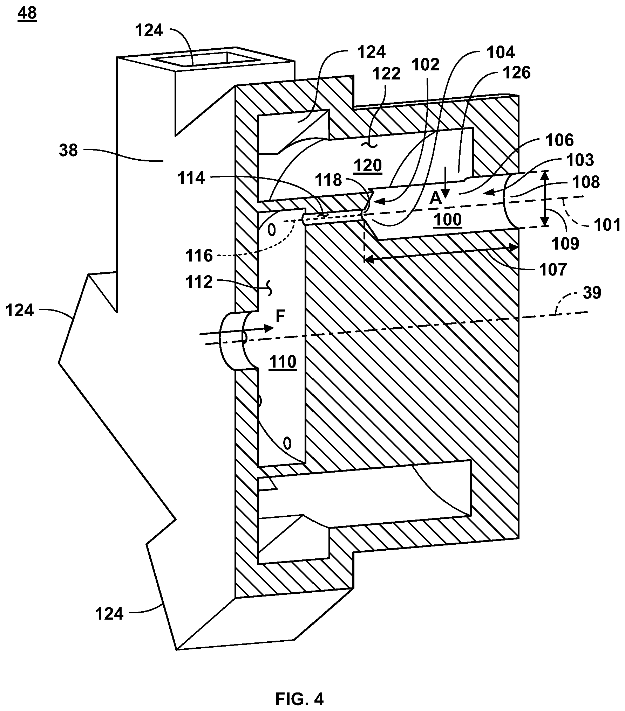

Referring to FIGS. 3 and 4, the set of mixing tubes 100 can include a plurality of mixing tubes in a spaced arrangement. Each mixing tube of the set of mixing tubes 100 defines a mixing tube centerline 101 extending from a mixing tube upstream end 102 to a mixing tube downstream end 103. The mixing tube centerline 101 can be parallel with the fuel nozzle assembly centerline 39 (e.g. extend axially). Each mixing tube of the set of mixing tubes 100 includes a mixing tube fuel inlet 104 disposed at or near the mixing tube upstream end 102, and a mixing tube air inlet 106 disposed between the mixing tube upstream end 102 and the mixing tube downstream end 103, such as downstream of the mixing tube fuel inlet 104. Within each mixing tube of the set of mixing tubes 100, gaseous fuel F and air A are mixed before being expelled into the combustion chamber 50 (FIG. 3) to be combusted. Each mixing tube of the set of mixing tubes 100 further includes a mixing tube outlet 108 disposed at or near the mixing tube downstream end 103, for example downstream of the mixing tube fuel inlet 104 and the mixing tube air inlet 106, and fluidly coupled with the combustion chamber 50 (FIG. 3). A cross-sectional area of the set of mixing tube outlets 108 can define a collective flow area. A bluff body area can be defined as an area of an aft surface of the fuel nozzle body 38 (e.g. a surface of the fuel nozzle body 38 at the fuel nozzle assembly downstream end 49) extending between the mixing tube outlets of the set of mixing tube outlets 108. In a non-limiting example, a ratio of the collective flow area to the bluff body area can be in a range of 0.01 to 10, inclusive of endpoints. The mixing tube air inlet 106 can be configured as a tangential air inlet configured to receive air A flowing in a tangential direction relative to the mixing tube centerline 101. The mixing tube fuel inlet 104 can be configured as an axial fuel inlet configured to receive fuel F flowing in a direction parallel to the fuel nozzle assembly centerline 39. However, the mixing tube fuel inlet 104 is not limited to receiving fuel flow in the axial direction, and can additionally or alternatively be configured to receive fuel F flowing in a direction non-parallel with the fuel nozzle assembly centerline 39 such as in the radial direction or a direction between the axial direction and the radial direction with respect to the fuel nozzle assembly centerline 39.

A mixing length 107 can be defined for a portion of each mixing tube of the set of mixing tubes 100 in which air A and fuel F are mixed. In a non-limiting example, the mixing length 107 can be defined by a length from the fuel jet outlet 118, which can be at the mixing tube upstream end 102, to the mixing tube downstream end 103 along the mixing tube centerlines 101 of the set of mixing tubes 100. The mixing tube outlet 108 of each mixing tube of the set of mixing tubes 100 defines an outlet diameter 109. In a non-limiting example, a ratio of the mixing length 107 to the outlet diameter 109 of each mixing tube of the set of mixing tubes 100 can be in a range from 0 (e.g. at the mixing tube outlet 108) to 200, inclusive of endpoints.

The fuel passage 110 is fluidly coupled to the fuel supply 34 (FIG. 3). In some examples, the fuel passage 110 can include a fuel plenum 112 (e.g., a gaseous fuel plenum) that can include a cylindrical configuration centered about the fuel nozzle assembly centerline 39. The fuel passage 110 can further include a set of fuel jets 114 (e.g., gaseous fuel jets) in a spaced arrangement (e.g., circumferentially spaced about the fuel nozzle assembly centerline 39). The fuel plenum 112 can supply fuel F to the set of fuel jets 114. Each fuel jet of the set of fuel jets 114 can be located forward of a corresponding mixing tube of the set of mixing tubes 100 and extend along a fuel jet centerline 116 from the fuel plenum 112 to the corresponding mixing tube of the set of mixing tubes 100 to fluidly couple each mixing tube of the set of mixing tubes 100 with the fuel supply 34 (FIG. 3). Each fuel jet of the set of fuel jets 114 includes a fuel jet outlet 118 that opens into a respective mixing tube upstream end 102 at the respective mixing tube fuel inlet 104 to provide fuel F such that the fuel F flows into the respective mixing tube of the set of mixing tubes 100. The spaced arrangement of the set of fuel jets 114 may mirror the spaced arrangement of set of the mixing tubes 100. For example, each fuel jet centerline 116 can be parallel with the fuel nozzle assembly centerline 39 such that each fuel jet centerline 116 is colinear with a mixing tube centerline 101 of the corresponding mixing tube of the set of mixing tubes 100. Additionally or alternatively, the fuel jet centerline 116 of one or more fuel jets of the set of fuel jets 114 can be offset from or angled relative to the mixing tube centerline 101 of a corresponding mixing tube of the set of mixing tubes 100.

The shape of the mixing tube upstream end 102 of each mixing tube of the set of mixing tubes 100 is defined by the fuel nozzle body 38 and is not limited to a flat planar shape. In another non-limiting example, a mixing tube upstream end of the set of mixing tube upstream ends 102 of at least one mixing tube of the set of mixing tubes 100, such as a mixing tube upstream end 102, can have a conical shape extending into the mixing tube towards the mixing tube downstream end 103 (FIG. 3).

The air passage 120 is fluidly coupled to the air supply to provide air A to the set of mixing tubes 100 for mixing with fuel F. In some examples, the air passage 120 can include an air plenum 122, a set of air passage inlets 124, and a set of air passage outlets 126. The air plenum 122 receives air A from the set of air passage inlets 124. The set of air passage inlets 124 may include a plurality of air passage inlets 124 spaced about the air plenum 122. Each air passage inlet of the set of air passage inlets 124 may be oriented such that air A flows into the air plenum 122 in a direction tangential to the fuel nozzle assembly centerline 39. For example, each air passage inlet of the set of air passage inlets 124 can be tangentially, fluidly coupled to the air plenum 122. Each air passage outlet of the set of air passage outlets 126 is fluidly coupled to a corresponding mixing tube of the set of mixing tubes 100 to provide air A to the set of mixing tubes 100. For example, each air passage outlet of the set of air passage outlets 126 may be coupled with the mixing tube air inlet 106 of a corresponding mixing tube of the set of mixing tubes 100 such that air A flows in a tangential direction (e.g., a tangential direction relative to the corresponding mixing tube centerline 101), at least to some degree, from the an air passage outlet of the set of air passage outlets 126 into the corresponding mixing tube of the set of mixing tubes 100.

A ratio of a mass flow of air A supplied to the set of mixing tubes 100 to a mass flow of fuel F supplied to the set of mixing tubes 100 can, for example, be greater than or equal to 0 and less than or equal to 100. The tangential introduction of air A into the set of mixing tubes 100 causes air A in the set of mixing tubes 100 to swirl about the mixing tube centerlines 101, which combined with the introduction of fuel F into the set of mixing tubes 100, creates a vortex. The vortex facilitates mixing of fuel F and air A and helps even out flow variation in the combustion chamber 50 (FIG. 3) and between combustor portions 31 (FIG. 2). After fuel F and air A are mixed, the fuel-air mixture can have, for example, a fuel to air mass ratio of greater than or equal to 0.005 and less than or equal to 0.060. By way of non-limiting example, at least for some fuels, the desired fuel-air mixture can have a fuel to air mass ratio of greater than or equal to 0.005 and less than or equal 0.030.

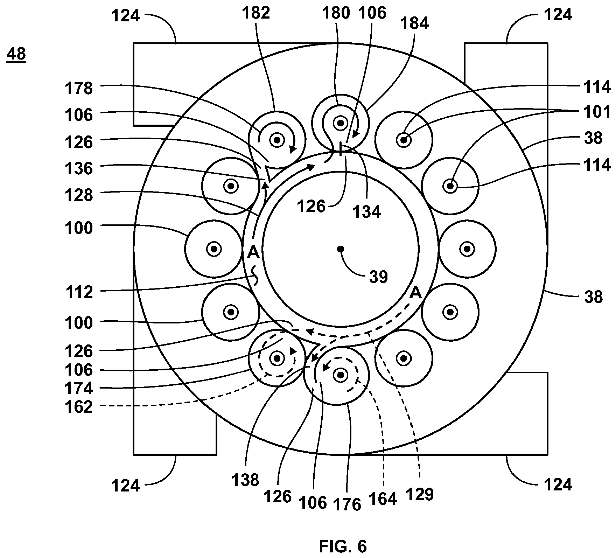

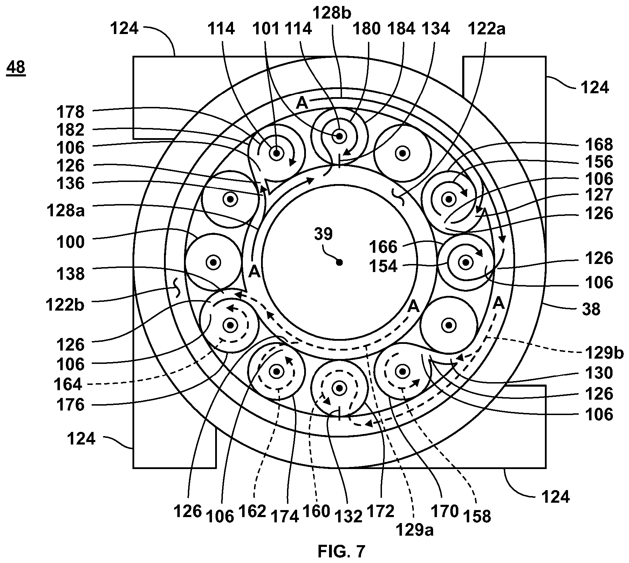

Referring to FIGS. 3-7, the air plenum 122 can include an annular shape centered on the fuel nozzle assembly centerline 39. The set of fuel jets 114 are circumferentially spaced from each other in an annular arrangement centered on the fuel nozzle assembly centerline 39. Similarly, the set of mixing tubes 100 are circumferentially spaced from each other in an annular arrangement centered on the fuel nozzle assembly centerline 39. For example, each mixing tube of the set of mixing tubes 100 is circumferentially spaced relative to each other mixing tube of the set of mixing tubes 100, and each mixing tube air inlet of the set of mixing tube air inlets 106 is circumferentially spaced relative to each other mixing tube air inlet of the set of mixing tube air inlets 106. For example, the air plenum 122, the annular arrangement of the set of fuel jets 114, and the annular arrangement of the set of mixing tubes 100 can be concentric with each other. In the examples illustrated in FIGS. 3-5, the air plenum 122 is disposed radially outward from the set of mixing tubes 100 and the set of fuel jets 114 relative to the fuel nozzle assembly centerline 39. However, the air plenum 122, the set of mixing tubes 100, and the set of fuel jets 114 are not limited to this configuration. The air plenum 122 can be disposed radially inward of the set of mixing tubes 100 and the set of fuel jets 114 relative to the fuel nozzle assembly centerline 39, radially outward from the set of mixing tubes 100 and the set of fuel jets 114, or a combination thereof. In the example illustrated in FIG. 6, the air plenum 122 is disposed radially inward of the set of mixing tubes 100 and the set of fuel jets 114 relative to the fuel nozzle assembly centerline 39. In the example illustrated in FIG. 7, the air plenum 122 includes a first portion 122a disposed radially inward of the set of mixing tubes 100 and the set of fuel jets 114 relative to the fuel nozzle assembly centerline 39, and a second portion 122b disposed radially outward from the set of mixing tubes 100 and the set of fuel jets 114 relative to the fuel nozzle assembly centerline 39.

A fluid pressure within the set of mixing tubes 100 is lower than a fluid pressure in the air plenum 122, which draws air A into the set of mixing tubes 100. The air plenum 122 and the set of mixing tubes 100 are configured to generate corotational flow, counter-rotational flow, or a combination thereof based on the position of each air passage inlet of the set of air passage inlets 124 with respect to the air plenum 122 and the position of each mixing tube air inlet of the set of mixing tube air inlets 106 with respect to the corresponding mixing tubes of the set of mixing tubes 100.

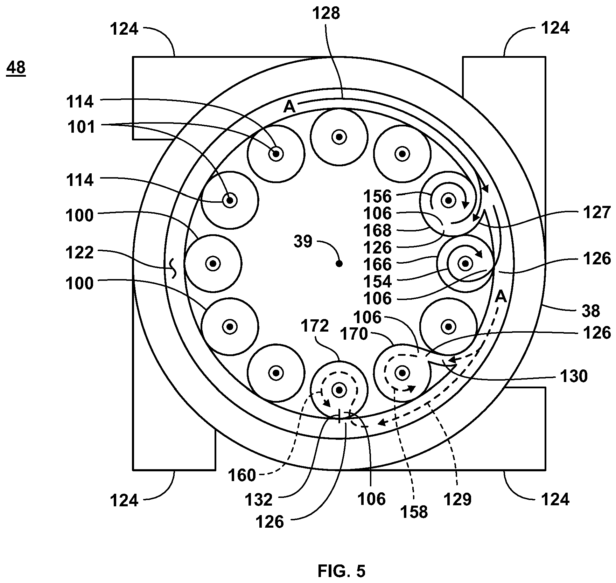

FIG. 5 illustrates non-limiting examples of flow patterns of air A within the fuel nozzle assembly 48. Corotational flow of the air plenum 122 and a mixing tube of the set of mixing tubes 100 refers to the direction of the flow of air A through the air plenum 122 and the direction of the flow of air A in the mixing tube being the same. For example, a solid arrow 128 depicts air A in the air plenum 122 flowing from the air passage inlets 124 in a clockwise direction about the fuel nozzle assembly centerline 39, and solid arrows 154 and 156 each depict air A in a mixing tube of the set of mixing tubes 100 flowing clockwise about the respective mixing tube centerline 101 of mixing tubes 166, 168 of the set of mixing tubes 100.

Corotational flow can be achieved, in one example, by disposing an air passage outlet of the set of air passage outlets 126 at an inner radial surface of the air plenum 122 relative to the fuel nozzle assembly centerline 39 and disposing a mixing tube air inlet of the set of mixing tube air inlets 106 at an adjacent outer radial section of the mixing tube 166 of the set of mixing tubes 100 relative to the fuel nozzle assembly centerline 39. A portion of air A flowing through the air plenum 122 in the clockwise direction illustrated by the solid arrow 128 is tangentially received by the mixing tube 166 through the corresponding mixing tube air inlet, and the received air A subsequently flows within the mixing tube 166 in a clockwise direction (e.g., about the corresponding mixing tube centerline 101) illustrated by the solid arrow 154. Air A remaining in the air plenum 122 continues to flow in the clockwise direction illustrated by the solid arrow 128, and portions of the remaining air A may be received by subsequent mixing tubes of the set of mixing tubes 100.

Although corotational flow can be achieved by positioning an air passage outlet of the set of air passage outlets 126 adjacent to the corresponding mixing tube air inlet of the set of mixing tube air inlets 106 as described above, the position of the air passage outlet and corresponding mixing tube air inlet are not limited to this configuration. For example, a mixing tube air inlet of the set of mixing tube air inlets 106 of a mixing tube of the set of mixing tubes 100, such as a mixing tube 168, can be disposed at a position offset from an outer radial section of the mixing tube relative to the fuel nozzle assembly centerline 39, and a fluid conduit 127 (e.g., passage, pipe, tube, etc.) of the air passage 120 can extend from the air plenum 122. The fluid conduit 127 includes a distal end defining an air passage outlet of the set of air passage outlets 126 that is fluidly coupled with the mixing tube air inlet. In this configuration, air A flows from the air plenum 122 through the fluid conduit 127 to the mixing tube air inlet where air A is received tangentially and continues to flow within the mixing tube as illustrated by the solid arrow 156 in the same rotational direction as in the air plenum 122.

Corotational flow as described above can allow for air A that flows into a mixing tube of the set of mixing tubes 100 to maintain more momentum, which allows such air A to have a higher fluid velocity compared to a mixing tube of the set of mixing tubes 100 fluidly coupled with the air plenum 122 in a counter-rotational flow arrangement, which can decrease flashback and flameholding. For example, less direct flow paths utilized for counter-rotational flow can reduce flow momentum and fluid velocity.

Counter-rotational flow of the air plenum 122 and a mixing tube of the set of mixing tubes 100 refers to the direction of the flow of air A through the air plenum 122 and the direction of the flow of air A in the mixing tube being opposite. For example, a dashed arrow 129 depicts air A in the air plenum 122 flowing in the clockwise direction about the fuel nozzle assembly centerline 39, and dashed arrows 158 and 160 each depict air A in a mixing tube 170, 172 of the set of mixing tubes 100 flowing counterclockwise about the respective mixing tube centerline 101.

Counter-rotational flow can be achieved, in one example, by disposing a mixing tube air inlet of the set of mixing tube air inlets 106 of a mixing tube of the set of mixing tubes 100, such as mixing tube 170, at a position offset from an outer radial section of the mixing tube relative to the fuel nozzle assembly centerline 39. A fluid conduit 130 (e.g., passage, pipe, tube, etc.) of the air passage 120 can extend from the air plenum 122 and include a distal end defining an air passage outlet of the set of air passage outlets 126 that is fluidly coupled with the mixing tube air inlet offset from the outer radial section. In this configuration, air A flows through the air plenum 122 as illustrated by dashed arrow 129, then through the fluid conduit 130 to the mixing tube air inlet, where air A is received tangentially and continues to flow within the mixing tube in the opposite rotational direction as in the air plenum 122 as illustrated by the dashed arrow 158. In another example, a diverter 132 may direct the flow of air A in a U-shape such that air A flows in the clockwise direction through the air plenum 122 then tangentially into to a mixing tube 172 of the set of mixing tubes 100 where air A is diverted by the diverter 132 to flow counterclockwise as illustrated by the dashed arrow 160 to provide counter-rotational flow.

Counter-rotational flow as described above can cause or increase turbulence within the set of mixing tubes 100, which can facilitate increased mixing of the fuel F and air A.

It should be understood that the air plenum 122 and the set of mixing tubes 100 may be configured to generate both corotational and counter-rotational flow in order to balance the beneficial effects of both flow patterns. Flames produced by each mixing tube of the set of mixing tubes 100 within the combustion chamber 50 (FIG. 3) can interact at the respective mixing tube downstream ends 103 (FIG. 3). Alternating swirl directions within the set of mixing tubes 100 may lower flashback risk. Groupings of mixing tubes of the set of mixing tubes 100 generating corotational flow can cause bulk swirl and more mixing, which can reduce NOₓ emissions. For example, some mixing tubes of the set of mixing tubes 100 can be fluidly coupled with the air plenum 122 to generate corotational flow, and other mixing tubes of the set of mixing tubes 100 can be fluidly coupled with the air plenum 122 to generate counter-rotational flow.

FIG. 6 also illustrates non-limiting examples of flow patterns within the fuel nozzle assembly 48 and is similar to FIG. 5. For example, the air plenum 122 can include an annular shape centered on the fuel nozzle assembly centerline 39, the set of fuel jets 114 are disposed in an annular arrangement centered on the fuel nozzle assembly centerline 39 and the set of mixing tubes 100 are disposed in an annular arrangement centered on the fuel nozzle assembly centerline 39. As in FIG. 5, the air plenum 122 and the set of mixing tubes 100 are configured to generate corotational flow, counter-rotational flow, or a combination thereof based on the position of each air passage inlet of the set of air passage inlets 124 with respect to the air plenum 122 and the position of each mixing tube air inlet of the set of mixing tube air inlets 106 with respect to the corresponding mixing tubes of the set of mixing tubes 100. FIG. 6 differs from FIG. 5 in that the air plenum 122 is disposed radially inward from the set of mixing tubes 100 and the set of fuel jets 114 relative to the fuel nozzle assembly centerline 39.

Dashed arrow 129 depicts air A in the air plenum 122 flowing from the air passage inlets 124 in a clockwise direction about the fuel nozzle assembly centerline 39, and dashed arrows 162 and 164 each depict air A in a mixing tube of the set of mixing tubes 100 flowing counterclockwise about the respective mixing tube centerline 101.

Counter-rotational flow can be achieved, in one example, by disposing an air passage outlet of the set of air passage outlets 126 at an outer radial surface of the air plenum 122 relative to the fuel nozzle assembly centerline 39 and disposing a mixing tube air inlet of the set of mixing tube air inlets 106 at an adjacent inner radial section of a mixing tube of the set of mixing tubes 100, such as a mixing tube 174, relative to the fuel nozzle assembly centerline 39. A portion of air A flowing through the air plenum 122 in the clockwise direction illustrated by the dashed arrow 129 is tangentially received by the mixing tube through the mixing tube air inlet, and the received air A subsequently flows as illustrated by the dashed arrow 162 within the mixing tube in the counterclockwise direction (e.g., about the mixing tube centerline 101). Air A remaining in the air plenum 122 continues to flow in the clockwise direction illustrated by the dashed arrow 129 and portions of the remaining air A may be received by subsequent mixing tubes of the set of mixing tubes 100.

Although counter-rotational flow can be achieved by positioning an air passage outlet of the set of air passage outlets 126 at the air plenum 122 adjacent to the corresponding mixing tube air inlet of the set of mixing tube air inlets 106 as described above, the position of the air passage outlet and corresponding mixing tube air inlet are not limited to this configuration. For example, a mixing tube air inlet of the set of mixing tube air inlets 106 of a mixing tube of the set of mixing tubes 100, such as a mixing tube 176, can be disposed at a position offset from an inner radial section of the mixing tube relative to the fuel nozzle assembly centerline 39, and a fluid conduit 138 (e.g., passage, pipe, tube, etc.) of the air passage 120 (FIG. 3) can extend from the air plenum 122. The fluid conduit 138 can include a distal end defining an air passage outlet of the set of air passage outlets 126 that is fluidly coupled with the mixing tube air inlet. In this configuration, air A flows through the air plenum 122 as illustrated by the dashed arrow 129, then through the fluid conduit 138 to the mixing tube air inlet where air A is received tangentially by the mixing tube 176 and continues to flow as illustrated by the dashed arrow 164 within the mixing tube 176 in the opposite rotational direction as in the air plenum 122.

Solid arrow 128 depicts air A in the air plenum 122 flowing in the clockwise direction about the fuel nozzle assembly centerline 39, and solid arrows 178 and 180 each depict air A in a mixing tube of the set of mixing tubes 100 also flowing clockwise about the respective mixing tube centerline 101.

Corotational flow can be achieved, in one example, by disposing a mixing tube air inlet of the set of mixing tube air inlets 106 of a mixing tube of the set of mixing tubes 100, such as a mixing tube 182, at a position offset from an inner radial section of the mixing tube relative to the fuel nozzle assembly centerline 39, and a fluid conduit 136 (e.g., passage, pipe, tube, etc.) of the air passage 120 can extend from the air plenum 122 and include a distal end defining an air passage outlet of the set of air passage outlets 126 that is fluidly coupled with the mixing tube air inlet. In this configuration, air A flows through the air plenum 122 as illustrated by the solid arrow 128, then through the fluid conduit 130 to the mixing tube air inlet where air A is received tangentially by the mixing tube, and continues to flow within the mixing tube as illustrated by the solid arrow 178 in the same rotational direction as in the air plenum 122. In another example, a diverter 134 may direct the flow of air A in a U-shape such that air flows clockwise through the air plenum 122 as illustrated by the solid arrow 128, then tangentially into a mixing tube of the set of mixing tubes 100, such as a mixing tube 184, where air A continues to flow in the counterclockwise direction as illustrated by the solid arrow 180.

FIG. 7 shows a combination of aspects of the fuel nozzle assembly 48 depicted in FIGS. 5 and 6, namely the fuel nozzle body 38 defining a first portion 122a of the air plenum 122 that is disposed radially inward from the set of mixing tubes 100 and the set of fuel jets 114 relative to the fuel nozzle assembly centerline 39, and a second portion 122b of the air plenum 122 that is disposed radially outward from the set of mixing tubes 100 and the set of fuel jets 114 relative to the fuel nozzle assembly centerline 39. In this configuration, the first portion 122a of the air plenum 122, the second portion 122b of the air plenum 122, and the set of mixing tubes 100 are configured to generate corotational flow, counter-rotational flow, or a combination thereof based on the position of the air passage inlets 124 with respect to the first portion 122a of the air plenum 122 and the second portion 122b of the air plenum 122 and the position of each of the mixing tube air inlets of the set of mixing tube air inlets 106 with respect to the corresponding mixing tubes of the set of mixing tubes 100.

For example, corotational flow between the first portion 122a of the air plenum 122 and one or more mixing tubes of the set of mixing tubes 100, such as mixing tubes 182, 184, can be achieved via fluid conduits 136 or diverters 134. For example, Air A can flow clockwise about the first portion 122a of the air plenum 122 illustrated by a solid arrow 128a and clockwise about the mixing tube centerline 101 in the one or more mixing tubes, such as illustrated by the solid arrows 178 and 180. Corotational flow between the second portion 122b of the air plenum 122 and one or more mixing tubes of the set of mixing tubes 100, such as mixing tubes 166, 168, can be achieved by disposing an air passage outlet of the set of air passage outlets 126 at an inner radial surface of the second portion 122b of the air plenum 122 relative to the fuel nozzle assembly centerline 39 and disposing a mixing tube air inlet of the set of mixing tube air inlets 106 at an adjacent outer radial section of the one or more mixing tubes relative to the fuel nozzle assembly centerline 39, or by the fluid conduit 127. Air A can flow, for example, clockwise about the second portion 122b of the air plenum 122 as illustrated by a solid arrow 128b and clockwise about the mixing tube centerline 101 in the one or more mixing tubes, such as illustrated by the solid arrows 154 and 156.

Additionally or alternatively, counter-rotational flow can be provided between the first portion 122a of the air plenum 122 and one or more mixing tubes of the set of mixing tubes 100, such as mixing tubes 174 and 176. The counter-rotational flow can be provided via one or more fluid conduits, such as the fluid conduit 138 fluidly coupled with mixing tube 176. Additionally or alternatively, counter-rotational flow can be provided via disposing an air passage outlet of the set of air passage outlets 126 at an outer radial surface of the first portion 122a of the air plenum 122 relative to the fuel nozzle assembly centerline 39 and disposing a mixing tube air inlet of the set of mixing tube air inlets 106 at an adjacent outer radial section of the one or more mixing tubes relative to the fuel nozzle assembly centerline 39, such as illustrated with mixing tube 174. With counter-rotational flow relative to the first portion 122a, air A can flow, for example, clockwise about the first portion 122a, as illustrated by the dashed arrow 129a, and counterclockwise about the mixing tube centerline 101 of the one or more mixing tubes, such as mixing tubes 174,176, as illustrated by the dashed arrows 162, 164, respectively.

Additionally or alternatively, counter-rotational flow can be provided between the second portion 122b and one or more mixing tubes of the set of mixing tubes 100, such as mixing tubes 170, 172. The counter-rotational flow can be provided via one or more fluid conduits, such as the fluid conduit 130, or via one or more diverters, such as the diverter 132. With counter-rotational flow relative to the second portion 122b, air A can flow, for example, clockwise about the second portion 122b, as illustrated by dashed arrow 129b, and counterclockwise about the mixing tube centerline 101 in the one or more mixing tubes, such as mixing tubes 170, 172, as illustrated by the dashed arrows 158 and 160, respectively.

In some examples, air A in the first portion 122a of the air plenum 122 can flow in the same direction of air A in the second portion 122b of the air plenum 122. Alternatively, air A in the first portion 122a of the air plenum 122 can flow in the opposite direction of air A in the second portion 122b of the air plenum 122. Additionally or alternatively, the set of mixing tubes 100 can be fluidly coupled to the first portion 122a and the second portion 122b in an alternating configuration such that air A in adjacent mixing tubes of the set of mixing tubes 100 has opposite flow directions, which can facilitate mixing of fuel F (FIG. 4) and air A.

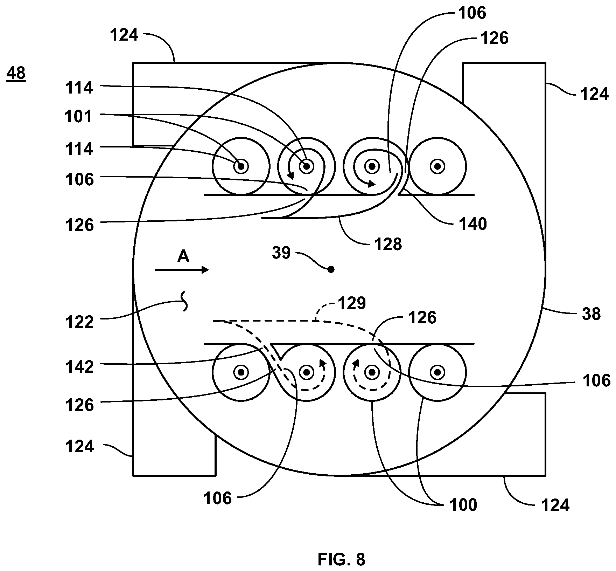

The air plenum 122 shown in FIGS. 3-7 has an annular shape, but the air plenum 122 is not limited to this shape. Referring to FIG. 8, the fuel nozzle body 38 of the fuel nozzle assembly 48 defines an air plenum 122 having a linear shape extending across the fuel nozzle assembly centerline 39. Alternatively, the air plenum 122 can extend such that the air plenum 122 is offset from the fuel nozzle assembly centerline 39. With the air plenum 122 including a linear shape, the set of fuel jets 114 and the set of mixing tubes 100 are spaced from each other in at least one linear arrangement in one or more linear rows. The one or more linear rows can, for example, include two linear rows disposed on opposing sides of the air plenum 122. The air plenum 122 can be fluidly connected with the air passage inlets 124 to receive air A. The air plenum 122 can also be fluidly coupled with a mixing tube of the set of mixing tubes 100 by disposing the corresponding air passage outlet of the set of air passage outlets 126 on the air plenum 122 adjacent to the corresponding mixing tube air inlet of the set of mixing tube air inlets 106. Alternatively, a fluid conduit 140, 142 (e.g., passage, pipe, tube, etc.) of the air passage 120 can fluidly couple the air plenum 122 with a mixing tube of the set of mixing tubes 100.

The position of each air passage outlet of the set of air passage outlets 126 with respect to a corresponding mixing tube air inlet of the set of mixing tube air inlets 106 can provide corotational flow illustrated by solid arrows 128, counter-rotational flow illustrated by dashed arrows 129, or a combination thereof amongst at least two mixing tubes of the set of mixing tubes 100. Corotational flow amongst two mixing tubes of the set of mixing tubes 100 refers to the direction of the flow of air A in each of the two mixing tubes being the same. Counter-rotational flow amongst two mixing tubes refers to the direction of the flow of air A in one of the two mixing tubes being opposite the flow of air A in the other mixing tube, for example, clockwise in one mixing tube and counterclockwise in the other mixing tube. Amongst at least three mixing tubes of the set of mixing tubes 100, a combination of corotational flow and counter-rotational flow refers to the direction of the flow of air A in some mixing tubes of the set of mixing tubes 100 being the same, for example, clockwise, and the direction of the flow of air A in some other mixing tubes of the set of mixing tubes 100 being opposite, for example, counterclockwise.

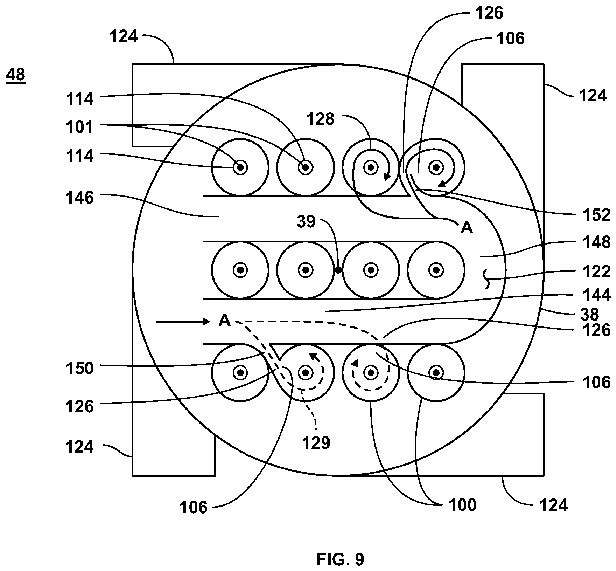

Referring to FIG. 9, the fuel nozzle body 38 of the fuel nozzle assembly 48 can define the air plenum 122 with a curvilinear or partially linear shape. In such a curvilinear or partially liner shape configuration, the air plenum 122 can include at least one linear segment and at least one curved segment. For example, the air plenum 122 can include two linear segments 144, 146 joined by a curved segment 148. The set of fuel jets 114 and corresponding set of mixing tubes 100 can be distributed on opposing sides along one or both of the linear segments 144, 146 of the air plenum 122. In a non-limiting example, as shown in FIG. 9, the set of fuel jets 114 and corresponding set of mixing tubes 100 and the corresponding mixing tube centerlines 101 are spaced from each other in three linear arrangements (e.g., rows). In some examples, one of the linear arrangements can extend through the fuel nozzle assembly centerline 39. The linear segments 144, 146 of the air plenum 122 are each disposed between two linear arrangements of fuel jets of the set of fuel jets 114 and corresponding mixing tubes of the set of mixing tubes 100. The air plenum 122 can be fluidly coupled with the air passage inlets 124 to receive air A. The air plenum 122 and the set of mixing tubes 100 are tangentially fluidly coupled by the set of air passage outlets 126 and corresponding mixing tube air inlets 106. The air plenum 122 can be fluidly coupled with a mixing tube of the set of mixing tubes 100 by disposing an air passage outlet of the set of air passage outlets 126 on the air plenum 122 adjacent to a corresponding mixing tube air inlet of the set of mixing tube air inlets 106. Alternatively, an air passage outlet of the set of air passage outlets 126 can be disposed at an end of a fluid conduit 150, 152 (e.g., passage, pipe, tube, etc.) to fluidly couple the air plenum 122 and a mixing tube of the set of mixing tubes 100. The position of each air passage outlet of the set of air passage outlets 126 with respect to the corresponding mixing tube air inlet of the set of mixing tube air inlets 106 can provide corotational flow, counter-rotational flow, or a combination thereof amongst at least two mixing tubes of the set of mixing tubes 100.

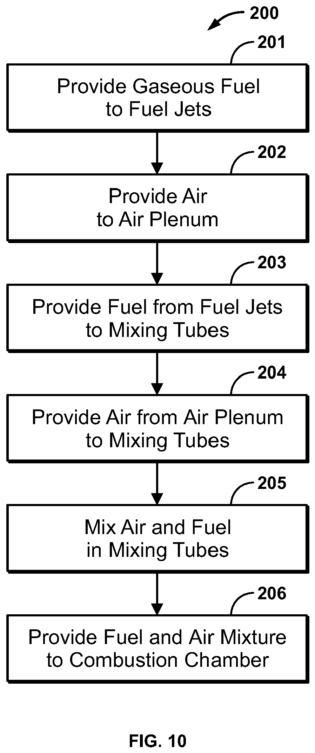

Referring to FIG. 10, a method 200 of operating the turbine engine 10 (FIG. 1), including the fuel nozzle assembly 48 (FIGS. 2-9), is provided. The method 200 includes providing gaseous fuel F to the fuel jets 114 (block 201), providing air A to the air plenum 122 (block 202), providing fuel F from the fuel jets 114 to the set of mixing tubes 100 in a direction that is parallel with the fuel nozzle assembly centerline 39 (e.g. the axial direction) (block 203), providing air A from the air plenum 122 to the set of mixing tubes 100 tangentially relative to each respective mixing tube centerline of the set of mixing tube centerlines 101 (block 204), mixing air A and fuel F in the set of mixing tubes 100 (block 205), and providing the fuel and air mixture to the combustion chamber 50 (block 206). At block 204, air A can be provided from the air plenum 122 to at least one mixing tube of the set of mixing tubes 100 to generate corotational flow, counter-rotational flow, or a combination thereof between the air plenum 122 and the at least one mixing tube. For example, at block 204, air A can be provided from the air plenum 122 to at least two mixing tubes of the set of mixing tubes 100 to generate corotational flow, counter-rotational flow, or a combination thereof between the at least two mixing tubes.

While described with respect to a turbine engine, it should be appreciated that the combustor as described herein can be for any engine with a having a combustor. It should be appreciated that application of aspects of the disclosure discussed herein are applicable to engines with propeller sections or fan and booster sections along with turbojets and turbo engines as well.

To the extent not already described, the different features and structures of the various embodiments can be used in combination, or in substitution with each other as desired. That one feature is not illustrated in all the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure. For example, and without limitation, combustors and combustor sections can include various combinations of fuel nozzle assemblies with various configurations of mixing tubes. In some examples, the same combustor or combustor section can include fuel nozzles assemblies and mixing tubes with any combination of the configurations illustrated in FIGS. 3-9.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
A turbine engine comprising a compressor section, a combustion section, and a turbine section in a serial flow arrangement, the combustion section comprising a combustor liner at least partially defining a combustion chamber, and a gaseous fuel nozzle assembly defining a fuel nozzle assembly centerline and comprising an annularly arranged set of mixing tubes, with each mixing tube of the set of mixing tubes having a mixing tube upstream end, a mixing tube downstream end, a tangential mixing tube air inlet, and defining a mixing tube centerline, an annularly arranged set of fuel jets with each fuel jet from the set of fuel jets fluidly coupled to a corresponding one of the set of mixing tubes, and an air passage including an annular air plenum and a set of air passage outlets, with each air passage outlet of the set of air passage outlets tangentially, fluidly coupled to a corresponding one of the mixing tube air inlets.

The turbine engine of any preceding clause, wherein the annularly arranged set of mixing tubes is concentric with the annular air plenum.

The turbine engine of any preceding clause, wherein the annular air plenum is disposed radially outward of the annularly arranged set of mixing tubes relative to the fuel nozzle assembly centerline.

The turbine engine of any preceding clause, wherein the annular air plenum is disposed radially inward of the annularly arranged set of mixing tubes relative to the fuel nozzle assembly centerline.

The turbine engine of any preceding clause, wherein one of the set of mixing tubes or set of tangential mixing tube air inlets is circumferentially spaced relative to another of the set of mixing tubes or set of tangential mixing tube air inlets.

The turbine engine of any preceding clause, wherein the set of tangential mixing tube air inlets is circumferentially spaced about the set of mixing tubes.

The turbine engine of any preceding clause, wherein the annular air plenum further includes a fluid conduit extending from the annular air plenum to a mixing tube air inlet of the set of mixing tube air inlets.

The turbine engine of any preceding clause, wherein each fuel jet of the set of fuel jets includes a fuel jet outlet and each mixing tube of the set of mixing tubes includes a mixing tube fuel inlet disposed at the mixing tube upstream end, and wherein each fuel jet outlet of the set of fuel jet outlets opens into the mixing tube fuel inlet of the corresponding one of the set of mixing tubes.

The turbine engine of any preceding clause, wherein the set of mixing tube fuel inlets is configured to receive fuel in a direction parallel or non-parallel with the fuel nozzle assembly centerline.

The turbine engine of any preceding clause, wherein a mixing tube air inlet of the set of mixing tube air inlets is downstream of a corresponding fuel mixing tube fuel inlet of the set of mixing tube fuel inlets.

The turbine engine of any preceding clause, wherein each fuel jet of the set of fuel jets extends along a fuel jet centerline that is parallel with the fuel nozzle assembly centerline.

The turbine engine of any preceding clause, wherein each mixing tube of the set of mixing tubes extend along a mixing tube centerline, and each fuel jet centerline is colinear with a corresponding mixing tube centerline.

The turbine engine of any preceding clause, wherein the arrangement of the set of fuel jets mirrors the arrangement of the set of mixing tubes.

The turbine engine of any preceding clause, wherein the annular air plenum is fluidly coupled with at least one of the set of mixing tubes to generate corotational air flow of the annular air plenum and the at least one of the set of mixing tubes.

The turbine engine of any preceding clause, wherein the annular air plenum is fluidly coupled with at least one of the set of mixing tubes to generate counter-rotational air flow of the annular air plenum and the at least one of the set of mixing tubes.

The turbine engine of any preceding clause further comprising a fuel plenum fluidly supplying the set of gaseous fuel jets.

The turbine engine of any preceding clause, wherein the air passage further includes a set of air passage inlets, with each air passage inlet of the set of air passage inlets tangentially, fluidly coupled to the annular air plenum.

The turbine engine of any preceding clause, wherein the mixing tube upstream end of a mixing tube of the set of mixing tubes has a conical shape.

The turbine engine of any preceding clause, wherein the annular air plenum includes a first portion disposed radially inward of the annularly arranged set of mixing tubes relative to the fuel nozzle assembly centerline and a second portion disposed radially outward of the annularly arranged set of mixing tubes relative to the fuel nozzle assembly centerline.

A turbine engine comprising a compressor section, a combustion section, and a turbine section in a serial flow arrangement, with the combustion section comprising a combustor liner at least partially defining a combustion chamber, and a gaseous fuel nozzle assembly defining a fuel nozzle assembly centerline and comprising a set of mixing tubes in spaced arrangement, with each mixing tube of the set of mixing tubes having a mixing tube upstream end and a mixing tube downstream end and defining a mixing tube centerline, a set of fuel jets in spaced arrangement with each fuel jet of the set of gaseous fuel jets fluidly coupled to a corresponding one of the mixing tubes, a set of tangential air inlets in spaced arrangement with a tangential air inlet from the set of tangential air inlets tangentially, fluidly coupled to a corresponding one of the mixing tubes.

The turbine engine of any preceding clause, wherein at least two tangential air inlets of the set of tangential air inlets are tangentially, fluidly coupled with at least two corresponding mixing tubes of the set of mixing tubes to generate corotational air flow of the at least two corresponding mixing tubes of the set of mixing tubes.

The turbine engine of any preceding clause, wherein at least two tangential air inlets of the set of tangential air inlets are tangentially, fluidly coupled with at least two corresponding mixing tubes of the set of mixing tubes to generate counter-rotational air flow of the at least two corresponding mixing tubes of the set of mixing tubes.

The turbine engine of any preceding clause, wherein at least three tangential air inlets of the set of tangential air inlets are tangentially, fluidly coupled with at least three corresponding mixing tubes of the set of mixing tubes to generate a combination of corotational air flow and counter-rotational air flow of the at least three corresponding mixing tubes of the set of mixing tubes.

The turbine engine of any preceding clause, wherein the mixing tube upstream end of a mixing tube of the set of mixing tubes has a conical shape.

The turbine engine of any preceding clause, wherein the air plenum has a linear shape extending across the fuel nozzle assembly centerline.

The turbine engine of any preceding clause, wherein the air plenum has a curvilinear or partially linear shape including at least one linear segment and at least one curved segment.

The turbine engine of any preceding clause, wherein each fuel jet of the set of fuel jets includes a fuel jet outlet and each mixing tube of the set of mixing tubes includes a mixing tube fuel inlet disposed at the mixing tube upstream end, and wherein each fuel jet outlet of the set of fuel jet outlets opens into the mixing tube fuel inlet of the corresponding one of the set of mixing tubes, and wherein the set of mixing tube fuel inlets is configured to receive fuel in a direction parallel or non-parallel with the fuel nozzle assembly centerline.

The turbine engine of any preceding clause wherein the set of set of mixing tube fuel inlets is configured to receive fuel in a direction perpendicular to the fuel nozzle assembly centerline.

The turbine engine of any preceding clause, wherein the gaseous fuel nozzle assembly includes or is fluidly coupled with a fuel supply configured to provide hydrogen fuel.

A gaseous fuel nozzle assembly defining a fuel nozzle assembly centerline and comprising an annularly arranged set of mixing tubes, with each mixing tube of the set of mixing tubes having a mixing tube upstream end, a mixing tube downstream end, a tangential mixing tube air inlet, and defining a mixing tube centerline, an annularly arranged set of fuel jets with each fuel jet from the set of fuel jets fluidly coupled to a corresponding one of the set of mixing tubes, and an air passage including an annular air plenum and a set of air passage outlets, with each air passage outlet of the set of air passage outlets tangentially, fluidly coupled to a corresponding one of the mixing tube air inlets.

The gaseous fuel nozzle assembly of any preceding clause, wherein the annularly arranged set of mixing tubes is concentric with the annular air plenum.

The gaseous fuel nozzle assembly of any preceding clause, wherein the annular air plenum is disposed radially outward of the annularly arranged set of mixing tubes relative to the fuel nozzle assembly centerline.

The gaseous fuel nozzle assembly of any preceding clause, wherein the annular air plenum is disposed radially inward of the annularly arranged set of mixing tubes relative to the fuel nozzle assembly centerline.

The gaseous fuel nozzle assembly of any preceding clause, wherein one of the set of mixing tubes or set of tangential mixing tube air inlets is circumferentially spaced relative to another of the set of mixing tubes or set of tangential mixing tube air inlets.

The gaseous fuel nozzle assembly of any preceding clause, wherein the set of tangential mixing tube air inlets is circumferentially spaced about the set of mixing tubes.

The gaseous fuel nozzle assembly of any preceding clause, wherein the annular air plenum further includes a fluid conduit extending from the annular air plenum to a mixing tube air inlet of the set of mixing tube air inlets.

The gaseous fuel nozzle assembly of any preceding clause, wherein each fuel jet of the set of fuel jets includes a fuel jet outlet and each mixing tube of the set of mixing tubes includes a mixing tube fuel inlet disposed at the mixing tube upstream end, and wherein each fuel jet outlet of the set of fuel jet outlets opens into the mixing tube fuel inlet of the corresponding one of the set of mixing tubes.

The gaseous fuel nozzle assembly of any preceding clause, wherein the set of mixing tube fuel inlets is configured to receive fuel in a direction parallel or non-parallel with the fuel nozzle assembly centerline.

The gaseous fuel nozzle assembly of any preceding clause, wherein a mixing tube air inlet of the set of mixing tube air inlets is downstream of a corresponding fuel mixing tube fuel inlet of the set of mixing tube fuel inlets.

The gaseous fuel nozzle assembly of any preceding clause, wherein each fuel jet of the set of fuel jets extends along a fuel jet centerline that is parallel with the fuel nozzle assembly centerline.

The gaseous fuel nozzle assembly of any preceding clause, wherein each mixing tube of the set of mixing tubes extends along a mixing tube centerline, and each fuel jet centerline is colinear with a corresponding mixing tube centerline.

The gaseous fuel nozzle assembly of any preceding clause, wherein the arrangement of the set of fuel jets mirrors the arrangement of the set of mixing tubes.

The gaseous fuel nozzle assembly of any preceding clause, wherein the annular air plenum is fluidly coupled with at least one of the set of mixing tubes to generate corotational air flow of the annular air plenum and the at least one of the set of mixing tubes.

The gaseous fuel nozzle assembly of any preceding clause, wherein the annular air plenum is fluidly coupled with at least one of the set of mixing tubes to generate counter-rotational air flow of the annular air plenum and the at least one of the set of mixing tubes.

The gaseous fuel nozzle assembly of any preceding clause, further comprising a fuel plenum fluidly supplying the set of gaseous fuel jets.

The gaseous fuel nozzle assembly of any preceding clause, wherein the mixing tube upstream end of a mixing tube of the set of mixing tubes has a conical shape.

The gaseous fuel nozzle assembly of any preceding clause, wherein the air passage further includes a set of air passage inlets, with each air passage inlet of the set of air passage inlets tangentially, fluidly coupled to the annular air plenum.

The gaseous fuel nozzle assembly of any preceding clause, wherein the annular air plenum includes a first portion disposed radially inward of the annularly arranged set of mixing tubes relative to the fuel nozzle assembly centerline and a second portion disposed radially outward of the annularly arranged set of mixing tubes relative to the fuel nozzle assembly centerline.

A gaseous fuel nozzle assembly defining a fuel nozzle assembly centerline and comprising a set of mixing tubes in spaced arrangement, with each mixing tube of the set of mixing tubes having a mixing tube upstream end and a mixing tube downstream end and defining a mixing tube centerline, a set of fuel jets in spaced arrangement with each fuel jet of the set of gaseous fuel jets fluidly coupled to a corresponding one of the mixing tubes, a set of tangential air inlets in spaced arrangement with a tangential air inlet from the set of tangential air inlets tangentially, fluidly coupled to a corresponding one of the mixing tubes.

The gaseous fuel nozzle assembly of any preceding clause, wherein at least two tangential air inlets of the set of tangential air inlets are tangentially, fluidly coupled with at least two corresponding mixing tubes of the set of mixing tubes to generate corotational air flow of the at least two corresponding mixing tubes of the set of mixing tubes.

The gaseous fuel nozzle assembly of any preceding clause, wherein at least two tangential air inlets of the set of tangential air inlets are tangentially, fluidly coupled with at least two corresponding mixing tubes of the set of mixing tubes to generate counter-rotational air flow of the at least two corresponding mixing tubes of the set of mixing tubes.

The gaseous fuel nozzle assembly of any preceding clause, wherein at least three tangential air inlets of the set of tangential air inlets are tangentially, fluidly coupled with at least three corresponding mixing tubes of the set of mixing tubes to generate a combination of corotational air flow and counter-rotational air flow of the at least three corresponding mixing tubes of the set of mixing tubes.

The gaseous fuel nozzle assembly of any preceding clause, wherein the mixing tube upstream end of a mixing tube of the set of mixing tubes has a conical shape.

The gaseous fuel nozzle assembly of any preceding clause, wherein the annular air plenum includes a first portion disposed radially inward of the annularly arranged set of mixing tubes relative to the fuel nozzle assembly centerline and a second portion disposed radially outward of the annularly arranged set of mixing tubes relative to the fuel nozzle assembly centerline.

The gaseous fuel nozzle assembly of any preceding clause, wherein the air plenum has a linear shape extending across the fuel nozzle assembly centerline.

The gaseous fuel nozzle assembly of any preceding clause, wherein the air plenum has a curvilinear or partially linear shape including at least one linear segment and at least one curved segment.

The gaseous fuel nozzle assembly of any preceding clause, wherein each fuel jet of the set of fuel jets includes a fuel jet outlet and each mixing tube of the set of mixing tubes includes a mixing tube fuel inlet disposed at the mixing tube upstream end, and wherein each fuel jet outlet of the set of fuel jet outlets opens into the mixing tube fuel inlet of the corresponding one of the set of mixing tubes, and wherein the set of mixing tube fuel inlets is configured to receive fuel in a direction parallel or non-parallel with the fuel nozzle assembly centerline.

A method of operating the turbine engine of any preceding clause, the method comprising providing gaseous fuel to the set of fuel jets, providing air to the air plenum, providing fuel from the set of fuel jets to the set of mixing tubes in a direction that is parallel with the fuel nozzle assembly centerline, providing air from the air plenum to the set of mixing tubes tangentially relative to each respective mixing tube centerline of the set of mixing tube centerlines, mixing air and fuel in the set of mixing tubes, and providing the fuel and air mixture to the combustion chamber.

The method of operating the turbine engine of any preceding clause, wherein air provided to at least two mixing tubes of the set of mixing tubes generates corotational flow between the at least two mixing tubes.

The method of operating the turbine engine of any preceding clause, wherein air provided to at least two mixing tubes of the set of mixing tubes generates corotational flow between the at least two mixing tubes.

The method of operating the turbine engine of any preceding clause, wherein air provided to at least three mixing tubes of the set of mixing tubes generates a combination of corotational flow and counter-rotational flow between the at least three mixing tubes.

The method of operating the turbine engine of any preceding clause, wherein air provided to the air plenum generates corotational flow with at least one mixing tube of the set of mixing tubes.

The method of operating the turbine engine of any preceding clause, wherein air provided to the air plenum generates counter-rotational flow with at least one mixing tube of the set of mixing tubes.

The method of operating the turbine engine of any preceding clause, wherein air provided to the air plenum generates a combination of corotational flow and counter-rotational flow with at least two mixing tubes of the set of mixing tubes.

## Claims

1. A turbine engine (10), comprising:
a compressor section (12), a combustion section (14), and a turbine section (16) in a serial flow arrangement, the combustion section (14) comprising:
a combustor liner (40) at least partially defining a combustion chamber (50); and
a gaseous fuel nozzle assembly (48) defining a fuel nozzle assembly centerline (39) and comprising:
an annularly arranged set of mixing tubes (100), with each mixing tube of the mixing tubes having a mixing tube upstream end (102), a mixing tube downstream end (103), a tangential mixing tube air inlet (106), and defining a mixing tube centerline (101),
an annularly arranged set of fuel jets (114) with each fuel jet from the set of fuel jets (114) fluidly coupled to a corresponding one of the set of mixing tubes (100), and
an air passage (110) including an annular air plenum (122, 122a, 122b) and a set of air passage outlets (126), with each air passage outlet of the set of air passage outlets (126) tangentially, fluidly coupled to a corresponding one of the mixing tube air inlets (106).

2. The turbine engine (10) of claim 1, wherein the annularly arranged set of mixing tubes (100) is concentric with the annular air plenum (122, 122a, 122b).

3. The turbine engine (10) of claim 2, wherein the annular air plenum (122, 122a, 122b) is disposed radially outward of the annularly arranged set of mixing tubes (100) relative to the fuel nozzle assembly centerline (39).

4. The turbine engine (10) of claim 2, wherein the annular air plenum (122, 122a, 122b) is disposed radially inward of the annularly arranged set of mixing tubes (100) relative to the fuel nozzle assembly centerline (39).

5. The turbine engine (10) of any of claims 1-4, wherein one of the set of mixing tubes (100) or set of tangential mixing tube air inlets (106) is circumferentially spaced relative to another of the set of mixing tubes (100) or set of tangential mixing tube air inlets (106).

6. The turbine engine (10) of claim 5, wherein the set of tangential mixing tube air inlets (106) is circumferentially spaced about the set of mixing tubes (100).

7. The turbine engine (10) of any of claims 1-6, wherein the annular air plenum (122, 122a, 122b) further includes a fluid conduit (130, 136, 138, 140, 142, 150, 152) extending from the annular air plenum (122, 122a, 122b) to a mixing tube air inlet of the set of mixing tube air inlets (106).

8. The turbine engine (10) of any of claims 1-7, wherein each fuel jet of the set of fuel jets (114) includes a fuel jet outlet (118) and each mixing tube of the set of mixing tubes (100) includes a mixing tube fuel inlet (104) disposed at the mixing tube upstream end (105), and
wherein each fuel jet outlet of the set of fuel jet outlets (118) opens into the mixing tube fuel inlet (104) of the corresponding one of the set of mixing tubes (100).

9. The turbine engine (10) of claim 7, wherein a mixing tube air inlet of the set of mixing tube air inlets (106) is downstream of a corresponding fuel mixing tube fuel inlet of the set of mixing tube fuel inlets (104).

10. The turbine engine (10) of any of claims 1-9, wherein each fuel jet of the set of fuel jets (114) extends along a fuel jet centerline (116) that is parallel with the fuel nozzle assembly centerline (39).

11. The turbine engine (10) of claim 9, wherein each mixing tube of the set of mixing tubes (100) extends along a mixing tube centerline (101), and
each fuel jet centerline (116) is colinear with a corresponding mixing tube centerline (101).

12. The turbine engine (10) of any of claims 1-11, wherein the annular air plenum (122, 122a, 122b) is fluidly coupled with at least one of the set of mixing tubes (100) to generate corotational air flow of the annular air plenum (122, 122a, 122b) and the at least one of the set of mixing tubes (100).

13. The turbine engine (10) of any of claims 1-11, wherein the annular air plenum (122, 122a, 122b) is fluidly coupled with at least one of the set of mixing tubes (100) to generate counter-rotational air flow of the annular air plenum (122, 122a, 122b) and the at least one of the set of mixing tubes (100).

14. The turbine engine (10) of any of claims 1-13, further comprising a fuel plenum (122) fluidly supplying the set of gaseous fuel jets (114).

15. The turbine engine (10) of any of claims 1-14, wherein the air passage (120) further includes a set of air passage inlets (124), with each air passage inlet of the set of air passage inlets (124) tangentially, fluidly coupled to the annular air plenum (122, 122a, 122b).
